# EUROPEAN PATENT SPECIFICATION

(11) **EP 4 164 084 B1**
(45) Date of publication and mention of the grant of the patent: **25.06.2025**
(21) Application number: 21841478.7
(22) Date of filing: 13.07.2021
(51) Int. Cl.: H02J 7/00, H01R 31/06, G06F 13/40, H01R 27/00

(54) **CHARGER, DATA LINE AND CHARGING DEVICE**
LADEGERÄT, DATENLEITUNG UND LADEVORRICHTUNG
CHARGEUR, LIGNE DE DONNÉES ET DISPOSITIF DE CHARGE

(30) Priority: 14.07.2020 CN 202010674298
(43) Date of publication of application: 12.04.2023
(73) Proprietor: Vivo Mobile Communication Co., Ltd., Dongguan, Guangdong 523863 (CN)
(72) Inventor: XIE, Yabing, Dongguan, Guangdong 523863 (CN)
(74) Representative: Murgitroyd & Company
(86) International application number: PCT/CN2021/106005
(87) International publication number: WO 2022/012529

(56) References cited:
- CN-A- 106 415 979
- CN-A- 107 706 685
- CN-A- 108 233 130
- CN-A- 108 599 530
- CN-A- 111 817 385
- CN-U- 207 691 160
- CN-U- 210 327 098
- US-A1- 2015 346 790
- US-A1- 2017 222 459
- US-A1- 2017 256 968

## Description

### TECHNICAL FIELD

This application pertains to the field of communications technologies, and specifically relates to a charger, a data cable, and a charging device.

### BACKGROUND

With the development of science and technology, fast charging is increasingly and widely applied.

In the related art, a power delivery (Power Delivery, PD) protocol is generally used for fast charging. A charger that supports PD protocol charging needs to perform communication by using a CC signal cable. The charger that supports the PD protocol charging generally uses a Standard-C (Type-C) port and a Type-C to Type-C data cable. A data cable using a Standard-A (Type-A or Standard-A) port performs communication through a D+/D-signal cable and cannot support the PD protocol charging. Therefore, a Type-A port on a conventional data cable does not support the PD protocol charging.

Document US 2015/346790 discloses a charger comprising a first Type-A port, a charging module, and a first power delivery, PD, transceiving module; wherein the first Type-A port comprises a data pin, a first terminal of the charging module is connected to the data pin, a second terminal of the charging module is connected to a first terminal of the first PD transceiving module, and a second terminal of the first PD transceiving module is connected to the data pin; wherein in a case that the first PD transceiving module receives a first signal transmitted through the data pin, the data cable is the first data cable; and in a case that the first PD transceiving module does not receive the first signal transmitted through the data pin, the data cable is the second data cable, and the first data cable generates the first signal when connected to the to-be-charged device. Document US 2015/346790 discloses also a data cable according to the preamble of claim 7.

### SUMMARY

Embodiments of this application are intended to provide a charger, a data cable, and a charging device, which can resolve a problem that a data cable with a Type-A port does not support PD protocol charging.

To resolve the foregoing technical problem, this application is implemented as follows.

According to a first aspect, an embodiment of this application provides a charger, including a first Type-A port, a charging module, and a first PD transceiving module,
where the first Type-A port includes a data pin, a first terminal of the charging module is connected to the data pin, a second terminal of the charging module is connected to a first terminal of the first PD transceiving module, and a second terminal of the first PD transceiving module is connected to the data pin;
in a case that the charger is connected to a data cable, if the data cable is a first data cable, the first PD transceiving module is in an operating state, and the charging module performs non-PD charging on a to-be-charged device based on a differential mode signal transmitted through the data pin, or the charging module performs PD charging on a to-be-charged device based on a common mode signal processed by the first PD transceiving module and transmitted through the data pin;
in a case that the charger is connected to the data cable, if the data cable is a second data cable, the first PD transceiving module is in a non-operating state, and the charging module performs non-PD charging on the to-be-charged device based on a differential mode signal transmitted through the data pin,
where in a case that the first PD transceiving module receives a first signal transmitted through the data pin, the data cable is the first data cable; and in a case that the first PD transceiving module does not receive the first signal transmitted through the data pin, the data cable is the second data cable, and the first data cable generates the first signal when connected to the to-be-charged device.

According to a second aspect, an embodiment of this application provides a data cable, including: a second Type-A port and a Type-C port, where the second Type-A port and the Type-C port are connected by a cable, the second Type-A port and the Type-C port each include a CC pin and a data pin, and CC pins and data pins in the second Type-A port and the Type-C port are connected in a one-to-one correspondence;
the data cable is provided with a second PD transceiving module, where a first terminal of the second PD transceiving module is connected to the CC pin, and a second terminal of the second PD transceiving module is connected to the data pin;
in a case that the data cable is connected to a charger, if the charger is a first charger, the second PD transceiving module is in an operating state, and the second PD transceiving module is configured to perform mutual conversion on a common mode signal transmitted through the data pin and a PD charging signal transmitted through the CC pin, so as to perform PD charging on a to-be-charged device, or the data cable and the first charger perform non-PD charging on the to-be-charged device based on a differential signal transmitted through the data pin;
in a case that the data cable is connected to a charger, if the charger is a second charger, the second PD transceiving module is in a non-operating state, and the data cable and the second charger perform non-PD charging on a to-be-charged device based on a differential signal transmitted through the data pin,
where in a case that the second PD transceiving module receives a second signal transmitted through the data pin, the charger is the first charger; and in a case that the second PD transceiving module does not receive the second signal transmitted through the data pin, the charger is the second charger, and the data cable generates a first signal when connected to the to-be-charged device, and the first charger generates the second signal in response to the first signal.

According to a third aspect, an embodiment of this application provides a charging device, including: a charger and a data cable, where the charger is the charger according to the first aspect, the data cable is the data cable according to the second aspect, and a data pin in the first Type-A port is correspondingly connected to a data pin in the second Type-A port.

In the embodiments of this application, the PD transceiving module is disposed in the charger, so that mutual conversion between a PD signal and the common mode signal transmitted through the data pin may be implemented through the PD transceiving module, while no interference with the differential mode signal transmitted through the data pin is caused. Therefore, the data pin in the Type-A port may be reused to implement transmission of the PD signal, and then the charging device including the charger and the Type-A to Type-C data cable can support the PD charging.

### BRIEF DESCRIPTION OF DRAWINGS

FIG. 1 is a structural diagram of a charging device according to an embodiment of this application;
FIG. 2 is a structural diagram of a charger according to an embodiment of this application;
FIG. 3 is a structural diagram of a data cable according to an embodiment of this application; and
FIG. 4 is a circuit diagram of a PD transceiving module in the charging device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that data used in this way may be interchangeable in an appropriate case, so that the embodiments of this application can be implemented in a sequence other than those shown or described herein, and objects distinguished by "first" and "second" are generally of a same type, and a quantity of objects is not limited. For example, there may be one or more first targets. In addition, in the specification and the claims, "and/or" represents at least one of connected objects, and a character "/" generally represents an "or" relationship between associated objects.

With reference to the accompanying drawings, the following describes in detail a charger, data cable, and charging device provided according to the embodiments of this application based on specific embodiments and application scenarios thereof.

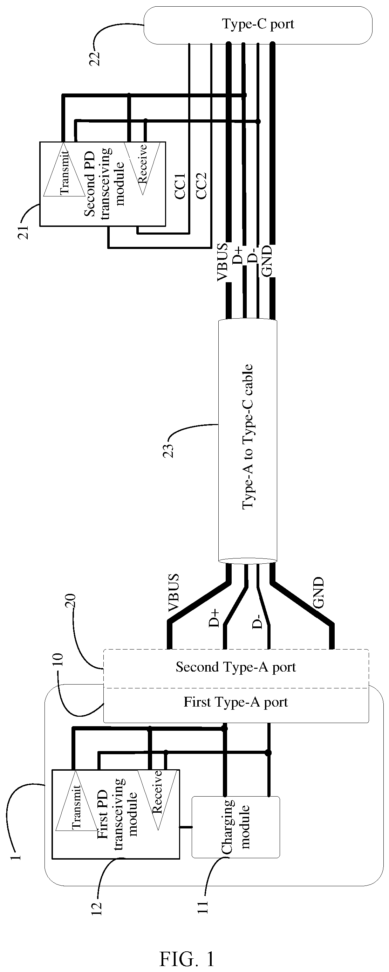

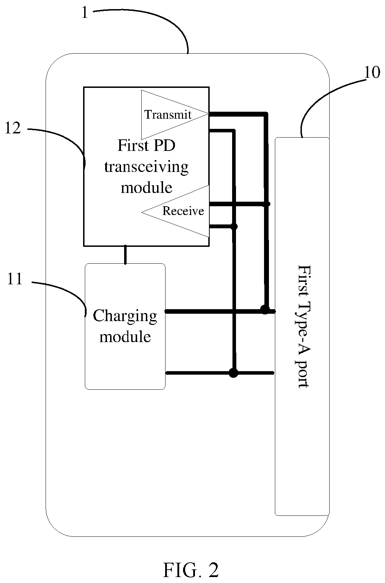

Referring to both FIG. 1 and FIG. 2, FIG. 1 is a structure of a charging device according to an embodiment of this application; and FIG. 2 is a structural diagram of a charger according to an embodiment of this application, where a charger 1 includes a first Type-A port 10, and a data cable 2 is a Type-A to Type-C data cable, and a second Type-A port 20 of the data cable 2 is matched with the first Type-A port 10, and a Type-C port of the data cable 2 can be connected to a to-be-charged device.

The charger 1 includes the first Type-A port 10, a charging module 11, and a first PD transceiving module 12. The first Type-A port 10 includes a data pin, a first terminal of the charging module 11 is connected to the data pin, a second terminal of the charging module 11 is connected to a first terminal of the first PD transceiving module 12, and a second terminal of the first PD transceiving module 12 is connected to the data pin.

In a case that the charger 1 is connected to the data cable 2, if the data cable 2 is a first data cable, the first PD transceiving module 12 is in an operating state, and the charging module 11 performs non-PD charging on a to-be-charged device based on a differential mode signal transmitted through the data pin, or the charging module 11 performs PD charging on a to-be-charged device based on a common mode signal processed by the first PD transceiving module 12 and transmitted through the data pin.

In a case that the charger 1 is connected to the data cable 2, if the data cable 2 is a second data cable, the first PD transceiving module 12 is in a non-operating state, and the charging module 11 performs non-PD charging on the to-be-charged device based on a differential mode signal transmitted through the data pin.

In a case that the first PD transceiving module 12 receives a first signal transmitted through the data pin, the data cable 2 is the first data cable. In a case that the first PD transceiving module 12 does not receive the first signal transmitted through the data pin, the data cable 2 is the second data cable, and the first data cable generates the first signal when connected to the to-be-charged device.

In specific implementation, data pins may be data pins in a second generation of universal serial bus (USB 2.0): a D+ pin (also called a positive data pin) and a D- pin (also called a negative data pin). Definitely, in specific implementation, the data pins may also be data pins in a third generation of universal serial bus (USB 3.0): a TX pin, an RX pin, and the like. For ease of understanding, the data pins are represented as a D+ pin and a D- pin in embodiments shown in FIG. 1 to FIG. 4, and a type of the data pins is not limited herein.

In addition, the second terminal of the first PD transceiving module 12 may include a receive terminal and a transmit terminal. In this case, the first PD transceiving module 12 may obtain a communication signal in the data pin through the receive terminal, and may further send the common mode signal to the data pin through the transmit terminal.

In addition, when the first PD transceiving module 12 is in the operating state, the second terminal thereof is in communication with the data pin. Specifically, the first terminal of the first PD transceiving module 12 is in communication with the second terminal thereof, so as to convert a PD signal received at the first terminal into a common mode signal and then transmit the common mode signal to the data pin at the second terminal, and convert the common mode signal obtained by the data pin at the second terminal into a PD signal and then transmit the PD signal to the charging module 11 through the first terminal.

In addition, when the first PD transceiving module 12 is in the non-operating state, the second terminal thereof may be disconnected from the data pin. Specifically, the first terminal of the first PD transceiving module 12 may be disconnected from the second terminal thereof, so as to prevent interference with a signal in the data pin.

In specific implementation, at least a PD charging communication protocol is configured in the charging module 11, and the first terminal of the first PD transceiving module 12 is configured to transmit communication information of the communication protocol.

In the embodiments of this application, the PD transceiving module is disposed in the charger, so that mutual conversion between a PD signal and the common mode signal transmitted through the data pin may be implemented through the PD transceiving module, while no interference with the differential mode signal transmitted through the data pin is caused. Therefore, the data pin in the Type-A port may be reused to implement transmission of the PD signal, and then the charging device including the charger and the Type-A to Type-C data cable can support the PD charging.

It should be noted that, in specific implementation, the charging module 11 may further be configured with a non-PD charging communication protocol, such as a communication protocol for transmission of a communication signal through a data pin. In this case, the charging module 11 directly negotiates, through the data pin, non-PD charging with a to-be-charged device, without conversion through the first PD transceiving module 12. Specifically, in a case that the data pins include the D+ pin and D- pin, the charging module 11 may be configured with a preset communication protocol, and a communication signal in the preset communication protocol is transmitted through the D+ pin and D- pin, and a charging parameter of DP and DM fast charging may be determined through negotiation of the communication signal in the preset communication protocol, so as to implement the DP and DM fast charging standardly equipped for the charging device against a to-be-charged device. Definitely, in specific implementation, a general protocol may also be configured in the charging module 11, and the communication signal in the general protocol may also be transmitted through the D+ pin and the D- pin. The communication signal in the general protocol transmitted through the D+ pin and the D- pin can implement the DP and DM charging non-standardly equipped for the charging device against a to-be-charged device, in a principle that is the same as a process of the DP and DM charging in the prior art, which will not be repeated herein again.

In this implementation, a communication signal of non-PD charging is the differential mode signal transmitted through the data pin. This way, communication signals transmitted through the data pin may be subtracted, to eliminate a common mode signal and then obtain a differential mode signal; or communication signals transmitted through the data pin are added, to eliminate a differential mode signal and then obtain a common mode signal.

In application, the differential mode signal and the common mode signal transmitted through the data pin have different code rates. Specifically, in a case that the data pins are the D+ pin and D- pin, a code rate for transmitting a differential mode signal through the data pins may be 12 MHz (megahertz) or 480 MHz, and then a code rate for transmitting a common mode signal through the D+ pin and D- pin is not equal to 12 MHz or 480 MHz.

In addition, when a Type-C port of a data cable connected to the charger or a to-be-charged device obtains communication signals transmitted through the data pin, the communication signals are added, to obtain a common mode signal, and then a PD signal is obtained based on the common mode signal.

In addition, after the Type-C port of the data cable connected to the charger or a to-be-charged device may further convert the PD signal transmitted to the charger into the common mode signal, and then the common mode signal is transmitted to the first PD transceiving module 12 through the data pin, and the first PD transceiving module 12 obtains the communication signals transmitted through the data pin and performs addition, to obtain the common mode signal corresponding to the PD signal. Therefore, PD communication between the charger and the to-be-charged device can be implemented. In addition, a PD charging parameter of the to-be-charged device is determined according to PD communication content, and then PD charging can be implemented.

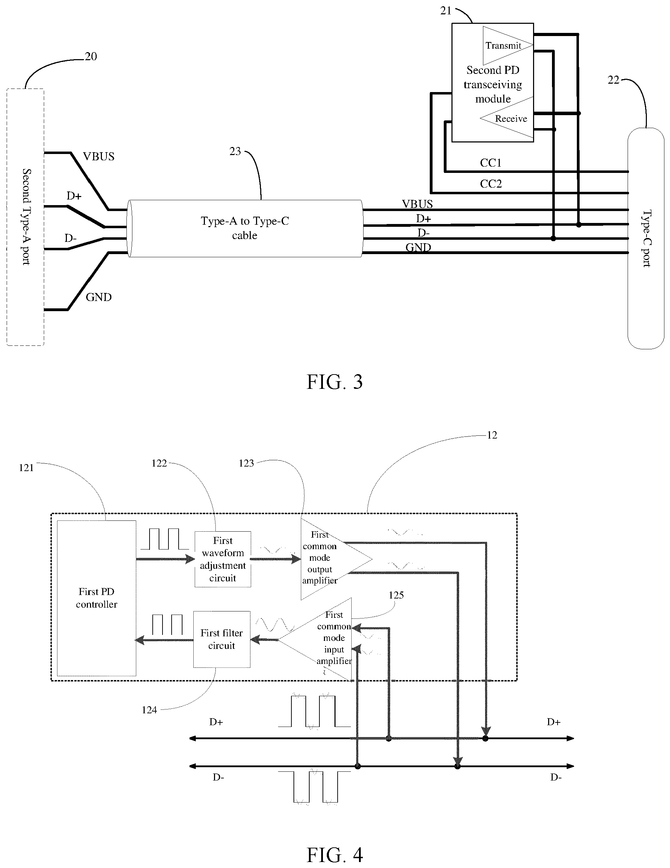

In specific implementation, the first data cable may be a data cable matched with the charger 1, and the second data cable may be a data cable unmatched with the charger 2. Specifically, the first data cable may be the data cable 2 shown in FIG. 1 and FIG. 3, and the data cable 2 includes: a second Type-A port 20 and a Type-C port 22. The second Type-A port 20 and Type-C port 22 are connected by a cable 23. The second Type-A port 20 and the Type-C port 22 each include a CC pin and a data pin, and CC pins and data pins in the second Type-A port 20 and the Type-C port 22 are connected in a one-to-one correspondence.

The data cable 2 is provided with a second PD transceiving module 21. A first terminal of the second PD transceiving module 21 is connected to the CC pin, and a second terminal of the second PD transceiving module 21 is connected to the data pin.

In a case that the data cable 2 is connected to a charger 1, if the charger 1 is a first charger, the second PD transceiving module 21 is in an operating state, and the second PD transceiving module 21 is configured to perform mutual conversion on a common mode signal transmitted through the data pin and a PD charging signal transmitted through the CC pin, so as to perform PD charging on a to-be-charged device. Alternatively, the data cable 2 and the first charger perform, based on a differential signal transmitted through the data pin, non-PD charging on a to-be-charged device.

In a case that the data cable 2 is connected to a charger 1, if the charger 1 is a second charger, the second PD transceiving module 21 is in a non-operating state, and the data cable 2 and the second charger perform non-PD charging on the to-be-charged device based on the differential signal transmitted through the data pin.

In a case that the second PD transceiving module 21 receives a second signal transmitted through the data pin, the charger 1 is the first charger. In a case that the second PD transceiving module 21 does not receive the second signal transmitted through the data pin, the charger 1 is the second charger, and the data cable 2 generates a first signal when connected to the to-be-charged device, and the first charger generates the second signal in response to the first signal.

The first charger may be the charger 1 shown in FIG. 1 and FIG. 2.

In this implementation, the second PD transceiving module 21 has a same structure as the first PD transceiving module 12, but a difference is that: the first terminal of the first PD transceiving module 12 is connected to the charging module 11, while the first terminal of the second PD transceiving module 21 is connected to the CC pin, so that the second PD transceiving module 21 is configured to implement mutual conversion between the PD signal transmitted through the CC pin and the common mode signal transmitted through the data pin.

This way, without making any change to a structure of the to-be-charged device, the charger and the Type-A to Type-C data cable provided by the embodiment of this application can perform PD charging on the to-be-charged device that supports the PD charging.

As an optional implementation, when the second PD transceiving module 21 determines, based on an electrical signal transmitted through the CC pin, that the data cable 2 generates a first signal when inserted into the to-be-charged device, and the first signal is transmitted to the first PD transceiving module 12 through the data pin.

In the first PD transceiving module 12, a first terminal of the first PD transceiving module 12 is in communication with a second terminal of the first PD transceiving module 12 in response to the first signal, and a second signal is generated. The second signal is transmitted to the second PD transceiving module 21 through the data pin, and in the second PD transceiving module 21, a first terminal of the second PD transceiving module 21 is in communication with a second terminal of the second PD transceiving module 21 in response to the second signal.

That the data cable 2 is inserted into the to-be-charged device may be that the Type-C port of the data cable 2 is inserted into a Type-C port of the to-be-charged device that supports the PD charging.

As an optional implementation, the second PD controller is configured to generate the first signal when a first preset electrical signal from a CC pin is detected by a second common mode input amplifier, and transmit the first signal to the positive data pin and the negative data pin through a second waveform adjustment circuit and a second common mode output amplifier. When the data cable is connected to a to-be-charged device that supports the PD charging, and the CC pin is grounded through a first resistor in the to-be-charged device that supports the PD charging, the CC pin has the first preset electrical signal.

The first preset electrical signal may be a voltage range. For example, in case that a detected voltage value of the CC pin is less than 3V (volt), it is determined that a data cable is connected to the to-be-charged device that supports the PD charging, so that the charger 1 may be triggered to enable the PD charging; and in a case that a detected voltage value of the CC pin is greater than or equal to 3V, it is determined that a data cable is connected to a to-be-charged device that does not support the PD charging, so that the charger 1 may be triggered to enable the non-PD charging. It should be noted that the voltage value of the first preset electrical signal being less than 3V is just an example. In specific implementation, a voltage value on CC wiring and a resistance value of the first resistor may be used for determining, which is not specifically limited herein.

It should be noted that, in actual application, if the to-be-charged device that supports the PD charging has a pull-down resistor (that is, the first resistor) connected to the CC pin, the second PD transceiving module 21 may send the first signal to the first PD transceiving module 12 through the data pin when determining that the CC pin is pulled down by the pull-down resistor based on an electrical signal value from the CC pin. When the first PD transceiving module 12 receives the first signal, it is determined that the charger 1 is connected, through the data cable, to the to-be-charged device that supports the PD charging, and sends, in response to the first signal, a second signal to the second PD transceiving module 21 through the data pin, so as to trigger, through the second signal, PD charging negotiation with the to-be-charged device. In specific implementation, the second signal may be a start of packet (Start of Packet, SOP) command of an output module.

In addition, the second charger may be a charger that does not match the data cable 2, specifically a charger that does not support the PD charging, a charger that does not have the first PD transceiving module 12, or the like. When the data cable 2 is connected to the second charger, the second charger will not transmit the second signal through the data pin in response to the first signal. In this case, the CC pin on the data cable 2 may be connected to a VBUS pin through the pull-up resistor, and a structure of the CC pin connected to the VBUS pin through the pull-up resistor is the same as a structure of a CC pin in the Type-C port in the prior art and has the same function, which will not be repeated herein.

As an optional implementation, as shown in FIG. 4, data pins include a positive data pin (D+ pin as shown in FIG. 4) and a negative data pin (D- pin as shown in FIG. 4). A first PD transceiving module 12 includes a first PD controller 121, a first waveform adjustment circuit 122, a first common mode output amplifier 123, a first filter circuit 124, and a first common mode input amplifier 125.

A first terminal of the first PD controller 121 is connected to a second terminal of a charging module 11, and a second terminal of the first PD controller 121 is connected to a first terminal of the first waveform adjustment circuit 122, a second terminal of the first waveform adjustment circuit 122 is connected to a first terminal of the first common mode output amplifier 123, a second terminal of the first common mode output amplifier 123 is connected to the D+ pin, and a third terminal of the first common mode output amplifier 123 is connected to the D- pin. A third terminal of the first PD controller 121 is connected to a first terminal of the first filter circuit 124, a second terminal of the first filter circuit 124 is connected to a first terminal of the first common mode input amplifier 125, a second terminal of the first common mode input amplifier 125 is connected to the D+ pin, and a third terminal of the first common mode input amplifier 125 is connected to the D- pin.

The first waveform adjustment circuit 122 is configured to convert a square wave signal transmitted by the first PD controller 121 into a sine wave signal and reduce an amplitude of the sine wave signal. The first common mode output amplifier 123 is configured to convert a reduced sine wave signal into a common mode signal, and perform common mode transmission through the D+ pin and the D- pin.

The first common mode input amplifier 125 is configured to amplify the common mode signal transmitted through the D+ pin and the D- pin, and the first filter circuit 124 is configured to perform filtering on an amplified common mode signal, convert a filtered and amplified common mode signal into the square wave signal and then transmit the square wave signal to the first PD controller 121.

In specific implementation, the first filter circuit 124 and the first common mode input amplifier 125 are further configured to obtain the first signal transmitted through the D+ pin and the D- pin, and transmit the first signal to the first PD controller 121. The first PD controller 121 is further configured to inform a control unit in the charging module 11 of the first signal, to respond to the first signal and generate a second signal. The second signal is transmitted to the D+ pin and the D- pin through the first PD controller 121, the first waveform adjustment circuit 122, and the first common mode output amplifier 123, and is obtained by a second PD transceiving module 21 in the data cable 2.

In addition, a PD signal output by the first PD controller 121 is a square wave signal, the square wave signal is adjusted to a sine wave signal by the first waveform adjustment circuit 122, and then the sine wave signal is adjusted to a common mode signal by the first common mode output amplifier 123, so that the common mode signal is transmitted in common mode through the D+ pin and the D- pin. In specific implementation, the common mode signal may be two same small sine signals.

In this implementation, the common mode signal transmitted through the D+ pin and the D- pin is obtained by the first filter circuit 124 and the first common mode input amplifier 125, and after the common mode signal is processed, the common mode signal is converted into a PD square wave signal and then transmitted to the first PD controller 121, so as to provide a recognizable PD signal to the charging module 11 through the first PD controller 121. In addition, the PD signal transmitted by the charging module 11 is modulated by the first PD controller 121, and processed by the first waveform adjustment circuit 122 and the first common mode output amplifier 123, and then a common mode signal which can be transmitted through the D+ pin and the D- pin is formed, and the common mode signal is transmitted to the to-be-charged device through the D+ pin and the D- pin, thereby implementing PD charging between the charger and the to-be-charged device.

As an optional implementation, as shown in FIG. 4, the first PD controller 121 is configured to generate a PD charging signal when a value of a first electrical signal from a positive data pin (D+ pin as shown in FIG. 4) and a negative data pin (D- pin as shown in FIG. 4) detected by the first common mode input amplifier 125 is less than a preset value, and configured to transmit the PD charging signal to the positive data pin and the negative data pin through the first waveform adjustment circuit 122 and the first common mode output amplifier 123, so as to perform PD charging on the to-be-charged device. The preset value does not overlap a value of a second electrical signal from the D+ pin and the D- pin during transmission of a non-PD charging signal.

In specific implementation, the value of the first electrical signal may be a voltage value of a communication signal transmitted through the D+ pin and the D- pin, and the preset value may be 500mV.

Specifically, the preset value may be greater than a high threshold VHSOH of a high-speed (High-speed, HS) signal of USB 2.0 and less than a high threshold VOH of a low-speed (Low-speed, LS) signal.

In this implementation, the first PD controller 121 may transmit a PD communication signal at a time other than a transmission time for transmitting a non-PD charging signal through the D+ pin and the D- pin, so that mutual interference between the PD communication signal and the non-PD charging signal can be prevented.

As an optional implementation, the first common mode input amplifier 125 is configured to amplify a first communication signal transmitted through the positive data pin (the D+ pin as shown in FIG. 4) and a second communication signal transmitted through the negative data pin (the D- pin as shown in FIG. 4), and obtain a common mode signal based on the first communication signal and the second communication signal.

In specific implementation, the first communication signal and the second communication signal may be common mode signals output by the second PD transceiving module 21 in the data cable 2 connected to the charger 1. Specifically, the second PD transceiving module 21 can convert a PD charging signal transmitted by a to-be-charged device through the CC pin into the first communication signal and the second communication signal, and transmit the first communication signal through the D+ pin and the second communication pin through the D- pin. This way, the first common mode input amplifier 125 may receive the first communication signal through the D+ pin and the second communication signal through the D- pin.

In addition, the first common mode input amplifier 125 may include an adding circuit, and that the common mode signals are obtained based on the first communication signal and the second communication signal may be understood as that one signal is obtained from common mode signals by adding the first communication signal and the second communication signal.

In this implementation, the first common mode input amplifier 125 converts two signals transmitted in common mode through the D+ pin and the D- pin into one signal, to facilitate mediation by the first PD controller.

As an optional implementation, the first common mode output amplifier 123 is configured to split a sine wave signal processed by the first waveform adjustment circuit 122 into a third communication signal and a fourth communication signal, and the third communication signal and the fourth communication signal are common mode signals.

In specific implementation, the third communication signal and the fourth communication signal may be same sine signals, and the same sine signals are transmitted in common mode on the D+ pin and the D- pin.

In this implementation, first, a square wave signal output by the first PD controller 121 is adjusted by the first waveform adjustment circuit 122 into the sine wave signal, and then the sine wave signal is split into common mode signals by the first common mode output amplifier 123, so as to facilitate common mode transmission through the D+ pin and the D- pin.

It should be noted that a PD transceiving module is also disposed in a data cable connected to the charger 1 or in the to-be-charged device connected to the data cable, and the PD transceiving module is connected to the D+ pin, the D- pin, and the CC pin. Therefore, when the third communication signal and the fourth communication signal transmitted in common mode is received through the D+ pin and the D- pin, the communication signals are added, to keep a common mode signal (that is, a PD charging signal), and then the common mode signal is transmitted to the PD charging module in the to-be-charged device through the CC pin, to implement the PD charging.

As an optional implementation, in a case that the charger 1 is connected to the first data cable, if a priority of the non-PD charging is greater than a priority of the PD charging, the non-PD charging is performed on the to-be-charged device; and if the non-PD charging fails, the PD charging is performed on the to-be-charged device.

In a case that the charger 1 is connected to the first data cable, if the priority of the PD charging is greater than the priority of the non-PD charging, the PD charging is performed on the to-be-charged device; and if the PD charging fails, the non-PD charging is performed on the to-be-charged device.

In specific implementation, the non-PD charging may be a charging mode based on a preset communication protocol, and a communication signal in the preset protocol may be transmitted through a data pin.

In application, the preset communication protocol is also pre-configured in a to-be-charged device standardly equipped for the charger 1, so that a charging parameter may be negotiated based on the preset communication protocol, and the standardly equipped to-be-charged device may be charged based on a standard and according to the charging parameter determined through negotiation.

In addition, when the charging device shown in FIG. 1 is connected to a non-standardly equipped to-be-charged device, the non-standardly equipped to-be-charged device is not configured with the preset communication protocol, so only PD communication may be implemented.

Definitely, as shown in FIG. 1, the charging device may further be connected to a to-be-charged device that is not standardly equipped and does not support the PD charging. In this case, a charging parameter may be negotiated according to a general charging protocol (for example, a general communication protocol for a communication signal that can be transmitted on the D+ pin and the D- pin), and the non-standardly equipped to-be-charged device is charged according to the charging parameter determined through negotiation, or the to-be-charged device is charged directly according to a default charging parameter.

In this implementation, a priority of the PD charging and a priority of the non-PD charging are set in advance, so that a charging protocol with a high priority may be used for charging the to-be-charged device.

As an optional implementation, the data pins include a positive data pin and a negative data pin, and the second PD transceiving module 21 includes a second PD controller, a second waveform adjustment circuit, a second common mode output amplifier, a second filter circuit, and a second common mode input amplifier.

A first terminal of the second PD controller is connected to the CC pin, a second terminal of the second PD controller is connected to a first terminal of the second waveform adjustment circuit, a second terminal of the second waveform adjustment circuit is connected to a first terminal of the second common mode output amplifier, a second terminal of the second common mode output amplifier is connected to the positive data pin, and a third terminal of the second common mode output amplifier is connected to the negative data pin. A third terminal of the second PD controller is connected to a first terminal of the second filter circuit, a second terminal of the second filter circuit is connected to a first terminal of the second common mode input amplifier, a second terminal of the second common mode input amplifier is connected to the positive data pin, and a third terminal of the second common mode input amplifier is connected to the negative data pin.

The second PD controller is configured to obtain a square wave signal transmitted through the CC pin. The second waveform adjustment circuit is configured to convert the square wave signal obtained by the second PD controller into a sine wave signal and reduce an amplitude of the sine wave signal. The second common mode output amplifier is configured to convert a reduced sine wave signal into common mode signals and perform common mode transmission through the positive data pin and the negative data pin.

The second common mode input amplifier is configured to amplify the common mode signals transmitted through the positive data pin and the negative data pin. The second filter circuit is configured to perform filtering on the amplified common mode signal, convert a filtered and amplified common mode signal into a square wave signal, and then transmit the square wave signal to the second PD controller, for transmission to the to-be-charged device through the CC pin.

It should be noted that the second PD transceiving module 21 in the data cable 2 may have a same structure and a same operating principle as the first PD transceiving module 12 in FIG. 4, but a difference is that: the first terminal of the first PD transceiving module 12 is connected to the charging module 11, while the first terminal of the second PD transceiving module 21 is connected to the CC pin, so that the second PD transceiving module 21 is configured to implement mutual conversion between the PD signal transmitted through the CC pin and the common mode signal transmitted through the data pin. An operating principle of the second PD transceiving module 21 will not be further described herein.

As an optional implementation, the second common mode input amplifier is configured to obtain a third communication signal transmitted through the positive data pin and a fourth communication signal transmitted through the negative data pin, and obtain a common mode signal based on the third communication signal and the fourth communication signal.

In specific implementation, the third communication signal and the fourth communication signal may be common mode signals output by the first PD transceiving module 12 in the charger 1 connected to the data cable 2. Specifically, the first PD transceiving module 12 can convert a PD charging signal output by a charging module into the third communication signal and the fourth communication signal, and transmit the third communication signal on the D+ pin and the fourth communication signal on the D- pin. This way, the second common mode input amplifier can receive the third communication signal through the D+ pin and the fourth communication signal through the D- pin.

For a structure and operating principle of the second common mode input amplifier, please refer to the structure and operating principle of the first common mode input amplifier, and the second common mode input amplifier can play a same role as the first common mode input amplifier, which will not be described herein again.

As an optional implementation, the second common mode output amplifier is configured to split the sine wave signal processed by the second waveform adjustment circuit into a first communication signal and a second communication signal, where the first communication signal and the second communication signal are common mode signals.

For an operating principle of the second common mode output amplifier, please refer to the operating principle of the first common mode output amplifier. In addition, the second common mode output amplifier can play a same role as the first common mode output amplifier, which will not be described herein again.

It can be understood that the embodiments described in the present disclosure may be implemented by hardware, software, firmware, middleware, microcode, or a combination thereof. For implementation with hardware, the module, unit, submodule, subunit, and the like may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of this application, or a combination thereof.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the electronic device in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations. The foregoing specific implementations are merely schematic instead of restrictive.

## Claims

1. A charger (1), comprising a first Type-A port (10), a charging module (11), and a first power delivery, PD, transceiving module (12); wherein
the first Type-A port (10) comprises a data pin, a first terminal of the charging module (11) is connected to the data pin, a second terminal of the charging module (11) is connected to a first terminal of the first PD transceiving module (12), and a second terminal of the first PD transceiving module (12) is connected to the data pin;
in a case that the charger (1) is connected to a data cable (2), if the data cable (2) is a first data cable, the first PD transceiving module (12) is in an operating state, and the charging module (11) performs non-PD charging on a to-be-charged device based on a differential mode signal transmitted through the data pin, or the charging module (11) performs PD charging on the to-be-charged device based on a common mode signal processed by the first PD transceiving module (12) and transmitted through the data pin;
in a case that the charger (1) is connected to the data cable (2), if the data cable (2) is a second data cable, the first PD transceiving module (12) is in a non-operating state, and the charging module (11) performs non-PD charging on the to-be-charged device based on a differential mode signal transmitted through the data pin; wherein
in a case that the first PD transceiving module (12) receives a first signal transmitted through the data pin, the data cable (2) is the first data cable; and in a case that the first PD transceiving module (12) does not receive the first signal transmitted through the data pin, the data cable (2) is the second data cable, and the first data cable generates the first signal when connected to the to-be-charged device.

2. The charger (1) according to claim 1, wherein the first PD transceiving module (12) comprises: a first PD controller (121), a first waveform adjustment circuit (122), a first common mode output amplifier (123), a first filter circuit (124), and a first common mode input amplifier (125); wherein
the first PD controller (121) is connected to the charging module (11), the first waveform adjustment circuit (122), and the first filter circuit (124), the first waveform adjustment circuit (122) is further connected to the data pin through the first common mode output amplifier (123), and the first filter circuit (124) is further connected to the data pin through the first common mode input amplifier (125);
the first waveform adjustment circuit (122) is configured to convert a square wave signal transmitted by the first PD controller (121) into a sine wave signal and reduce an amplitude of the sine wave signal, the first common mode output amplifier (123) is configured to convert a reduced sine wave signal into a common mode signal and perform common mode transmission through the data pin; and
the first common mode input amplifier (125) is configured to amplify the common mode signal transmitted through the data pin, and the first filter circuit (124) is configured to perform filtering on an amplified common mode signal, convert a filtered and amplified common mode signal into a square wave signal and transmit the square wave signal to the first PD controller (121).

3. The charger (1) according to claim 2, wherein the first PD controller (121) is configured to generate a PD charging signal in a case that a value of a first electrical signal from the data pin detected by the first common mode input amplifier (125) is less than a preset value, and transmit the PD charging signal to the data pin through the first waveform adjustment circuit (122) and the first common mode output amplifier (123), to perform PD charging on the to-be-charged device, wherein the preset value does not overlap a value of a second electrical signal from the data pin when transmitting a non-PD charging signal.

4. The charger (1) according to claim 2, wherein the data pin comprises a positive data pin and a negative data pin, the first common mode input amplifier (125) is configured to amplify a first communication signal transmitted through the positive data pin and a second communication signal transmitted through the negative data pin, and add the first communication signal and the second communication signal to obtain the common mode signal.

5. The charger (1) according to claim 2, wherein the first common mode output amplifier (123) is configured to split a sine wave signal processed by the first waveform adjustment circuit (122) into a third communication signal and a fourth communication signal, and the third communication signal and the fourth communication signal are common mode signals.

6. The charger (1) according to claim 1, wherein
in a case that the charger (1) is connected to the first data cable, if a priority of the non-PD charging is greater than a priority of the PD charging, the non-PD charging is performed on the to-be-charged device; and if the non-PD charging fails, the PD charging is performed on the to-be-charged device; and
in a case that the charger (1) is connected to the first data cable, if the priority of the PD charging is greater than the priority of the non-PD charging, the PD charging is performed on the to-be-charged device; and if the PD charging fails, the non-PD charging is performed on the to-be-charged device.

7. A data cable (2), comprising: a second Type-A port (20) and a Type-C port (22), wherein the second Type-A port (20) and the Type-C port (22) are connected by a cable (23), the second Type-A port (20) and the Type-C port (22) each comprise a CC pin and a data pin, and CC pins and data pins in the second Type-A port (20) and the Type-C port (22) are connected in a one-to-one correspondence;
**characterised in that**
the data cable (2) is provided with a second PD transceiving module (21), wherein a first terminal of the second PD transceiving module (21) is connected to the CC pin, and a second terminal of the second PD transceiving module (21) is connected to the data pin;
in a case that the data cable (2) is connected to a charger (1), if the charger (1) is a first charger, the second PD transceiving module (21) is in an operating state, and the second PD transceiving module (21) is configured to perform mutual conversion on a common mode signal transmitted through the data pin and a PD charging signal transmitted through the CC pin, to perform PD charging on a to-be-charged device, or the data cable (2) and the first charger perform non-PD charging on the to-be-charged device based on a differential signal transmitted through the data pin;
in a case that the data cable (2) is connected to a charger (1), if the charger (1) is a second charger, the second PD transceiving module (21) is in a non-operating state, and the data cable (2) and the second charger perform non-PD charging on the to-be-charged device based on a differential signal transmitted through the data pin; wherein
in a case that the second PD transceiving module (21) receives a second signal transmitted through the data pin, the charger (1) is the first charger; and in a case that the second PD transceiving module (21) does not receive the second signal transmitted through the data pin, the charger (1) is the second charger, and the data cable (2) generates a first signal when connected to the to-be-charged device, and the first charger generates the second signal in response to the first signal.

8. The data cable (2) according to claim 7, wherein the second PD transceiving module (21) comprises: a second PD controller, a second waveform adjustment circuit, a second common mode output amplifier, a second filter circuit, and a second common mode input amplifier; wherein
the second PD controller, the CC pin, the second waveform adjustment circuit, and the second filter circuit are connected to the data pin, and the second filter circuit is further connected to the data pin through the second common mode input amplifier;
the second PD controller is configured to obtain a square wave signal transmitted through the CC pin, the second waveform adjustment circuit is configured to convert the square wave signal obtained by the second PD controller into a sine wave signal and reduce an amplitude of the sine wave signal, and the second common mode output amplifier is configured to convert a reduced sine wave signal into a common mode signal and perform common mode transmission through the data pin; and
the second common mode input amplifier is configured to amplify the common mode signal transmitted through the data pin, and the second filter circuit is configured to perform filtering on an amplified common mode signal, convert a filtered and amplified common mode signal into a square wave signal and transmit the square wave signal to the second PD controller, to transmit the square wave signal to the to-be-charged device through the CC pin.

9. The data cable (2) according to claim 8, wherein the second PD controller is configured to generate the first signal when a first preset electrical signal from the CC pin is detected by the second common mode input amplifier, and transmit the first signal to the data pin through the second waveform adjustment circuit and the second common mode output amplifier, wherein when the data cable (2) is connected to a to-be-charged device that supports the PD charging, and the CC pin is grounded through a first resistor in the to-be-charged device that supports the PD charging, the CC pin has the first preset electrical signal.

10. The data cable (2) according to claim 8, wherein the data pin comprises a positive data pin and a negative data pin, and the second common mode input amplifier is configured to obtain a third communication signal transmitted through the positive data pin and a fourth communication signal transmitted through the negative data pin, and add the third communication signal and the fourth communication signal to obtain the common mode signal.

11. The data cable (2) according to claim 8, wherein the second common mode output amplifier is configured to split a sine wave signal processed by the second waveform adjustment circuit into a first communication signal and a second communication signal, wherein the first communication signal and the second communication signal are common mode signals.

12. A charging device, comprising a charger (1) and a data cable (2), and **characterized in that** the charger (1) is the charger (1) according to any one of claims 1 to 6, the data cable (2) is the data cable (2) according to any one of claims 7 to 11, and the data pin in the first Type-A port (10) is correspondingly connected to the data pin in the second Type-A port (20).

13. The charging device according to claim 12, wherein the second PD transceiving module (21) generates the first signal when it is determined, based on an electrical signal transmitted through the CC pin, that the data cable (2) is inserted into the to-be-charged device, and the first signal is transmitted to the first PD transceiving module (12) through the data pin; and
in the first PD transceiving module (12), the first terminal of the first PD transceiving module (12) is in communication with the second terminal of the first PD transceiving module (12) in response to the first signal, and the second signal is generated, the second signal is transmitted to the second PD transceiving module (21) through the data pin, and in the second PD transceiving module (21), the first terminal of the second PD transceiving module (21) is in communication with the second terminal of the second PD transceiving module (21) in response to the second signal.

## Patentansprüche

1. Ein Ladegerät (1), das einen ersten Typ-A-Anschluss (10), ein Lademodul (11) und ein erstes Sendeempfangsmodul (12) für die Leistungsabgabe, PD, beinhaltet; wobei
der erste Typ-A-Anschluss (10) einen Datenstift beinhaltet, eine erste Klemme des Lademoduls (11) mit dem Datenstift verbunden ist, eine zweite Klemme des Lademoduls (11) mit einer ersten Klemme des ersten PD-Sendeempfangsmoduls (12) verbunden ist, und eine zweite Klemme des ersten PD-Sendeempfangsmoduls (12) mit dem Datenstift verbunden ist;
in einem Fall, in dem das Ladegerät (1) mit einem Datenkabel (2) verbunden ist, wenn das Datenkabel (2) ein erstes Datenkabel ist, sich das erste PD-Sendeempfangsmodul (12) in einem Betriebszustand befindet und das Lademodul (11) ein Nicht-PD-Aufladen an einer aufzuladenden Vorrichtung auf Grundlage eines Differentialmodussignals durchführt, das durch den Datenstift übertragen wird, oder das Lademodul (11) ein PD-Aufladen an der aufzuladenden Vorrichtung auf Grundlage eines Gleichtaktsignals durchführt, das von dem ersten PD-Sendeempfangsmodul (12) verarbeitet und durch den Datenstift übertragen wird;
in einem Fall, in dem das Ladegerät (1) mit einem Datenkabel (2) verbunden ist, wenn das Datenkabel (2) ein zweites Datenkabel ist, sich das erste PD-Sendeempfangsmodul (12) in einem Nicht-Betriebszustand befindet und das Lademodul (11) ein Nicht-PD-Aufladen an der aufzuladenden Vorrichtung auf Grundlage eines Differentialmodussignals durchführt, das durch den Datenstift übertragen wird;
in einem Fall, in dem das erste PD-Sendeempfangsmodul (12) ein erstes Signal empfängt, das durch den Datenstift übertragen wird, das Datenkabel (2) das erste Datenkabel ist; und in einem Fall, in dem das erste PD-Sendeempfangsmodul (12) das erste Signal, das durch den Datenstift übertragen wird, nicht empfängt, das Datenkabel (2) das zweite Datenkabel ist und das erste Datenkabel das erste Signal erzeugt, wenn es mit der aufzuladenden Vorrichtung verbunden wird.

2. Ladegerät (1) gemäß Anspruch 1, wobei das erste PD-Sendeempfangsmodul (12) beinhaltet: eine erste PD-Steuervorrichtung (121), eine erste Wellenformanpassungsschaltung (122), einen ersten Gleichtaktausgangsverstärker (123), eine erste Filterschaltung (124) und einen ersten Gleichtakteingangsverstärker (125); wobei
die erste PD-Steuervorrichtung (121) mit dem Lademodul (11), der ersten Wellenformanpassungsschaltung (122) und der ersten Filterschaltung (124) verbunden ist, die erste Wellenformanpassungsschaltung (122) ferner mit dem Datenstift über den ersten Gleichtaktausgangsverstärker (123) verbunden ist und die erste Filterschaltung (124) ferner mit dem Datenstift über den ersten Gleichtakteingangsverstärker (125) verbunden ist;
die erste Wellenformanpassungsschaltung (122) dazu konfiguriert ist, ein von der ersten PD-Steuervorrichtung (121) übertragenes Rechtecksignal in ein Sinussignal umzuwandeln und eine Amplitude des Sinussignals zu reduzieren, der erste Gleichtaktausgangsverstärker (123) dazu konfiguriert ist, ein reduziertes Sinussignal in ein Gleichtaktsignal umzuwandeln und eine Gleichtaktübertragung über den Datenstift durchzuführen; und
der erste Gleichtakteingangsverstärker (125) dazu konfiguriert ist, das über den Datenstift übertragene Gleichtaktsignal zu verstärken, und die erste Filterschaltung (124) dazu konfiguriert ist, eine Filterung an einem verstärkten Gleichtaktsignal durchzuführen, ein gefiltertes und verstärktes Gleichtaktsignal in ein Rechtecksignal umzuwandeln und das Rechtecksignal an die erste PD-Steuervorrichtung (121) zu übertragen.

3. Ladegerät (1) gemäß Anspruch 2, wobei die erste PD-Steuervorrichtung (121) dazu konfiguriert ist, ein PD-Ladesignal in einem Fall zu erzeugen, in dem ein Wert eines ersten elektrischen Signals von dem Datenstift, das von dem ersten Gleichtakteingangsverstärker (125) erkannt wird, kleiner als ein voreingestellter Wert ist, und das PD-Ladesignal an den Datenstift durch die erste Wellenformanpassungsschaltung (122) und den ersten Gleichtaktausgangsverstärker (123) zu übertragen, um ein PD-Aufladen an der aufzuladenden Vorrichtung durchzuführen, wobei der voreingestellte Wert einen Wert eines zweiten elektrischen Signals von dem Datenstift nicht überlappt, wenn ein Nicht-PD-Ladesignal übertragen wird.

4. Ladegerät (1) gemäß Anspruch 2, wobei der Datenstift einen positiven Datenstift und einen negativen Datenstift beinhaltet, der erste Gleichtakteingangsverstärker (125) dazu konfiguriert ist, ein erstes Kommunikationssignal, das über den positiven Datenstift übertragen wird, und ein zweites Kommunikationssignal, das über den negativen Datenstift übertragen wird, zu verstärken und das erste Kommunikationssignal und das zweite Kommunikationssignal zu addieren, um das Gleichtaktsignal zu erhalten.

5. Ladegerät (1) gemäß Anspruch 2, wobei der erste Gleichtaktausgangsverstärker (123) dazu konfiguriert ist, ein von der ersten Wellenformanpassungsschaltung (122) verarbeitetes Sinussignal in ein drittes Kommunikationssignal und ein viertes Kommunikationssignal aufzuteilen, und das dritte Kommunikationssignal und das vierte Kommunikationssignal Gleichtaktsignale sind.

6. Ladegerät (1) gemäß Anspruch 1, wobei
in einem Fall, in dem das Ladegerät (1) mit dem ersten Datenkabel verbunden ist, wenn eine Priorität des Nicht-PD-Aufladens größer ist als eine Priorität des PD-Aufladens, das Nicht-PD-Aufladen an der aufzuladenden Vorrichtung durchgeführt wird; und wenn das Nicht-PD-Aufladen fehlschlägt, das PD-Aufladen an der aufzuladenden Vorrichtung durchgeführt wird; und
in einem Fall, in dem das Ladegerät (1) mit dem ersten Datenkabel verbunden ist, wenn die Priorität des PD-Aufladens größer ist als eine Priorität des Nicht-PD-Aufladens, das PD-Aufladen an der aufzuladenden Vorrichtung durchgeführt wird; und wenn das PD-Aufladen fehlschlägt, das Nicht-PD-Aufladen an der aufzuladenden Vorrichtung durchgeführt wird.

7. Ein Datenkabel (2), beinhaltend: einen zweiten Typ-A-Anschluss (20) und einen Typ-C-Anschluss (22), wobei der zweite Typ-A-Anschluss (20) und der Typ-C-Anschluss (22) durch ein Kabel (23) verbunden sind, der zweite Typ-A-Anschluss (20) und der Typ-C-Anschluss (22) jeweils einen CC-Stift und einen Datenstift beinhalten, und CC-Stifte und Datenstifte in dem zweiten Typ-A-Anschluss (20) und dem Typ-C-Anschluss (22) in einer Eins-zu-Eins-Entsprechung verbunden sind;
**dadurch gekennzeichnet, dass**
das Datenkabel (2) mit einem zweiten PD-Sendeempfangsmodul (21) versehen ist, wobei eine erste Klemme des zweiten PD-Sendeempfangsmoduls (21) mit dem CC-Stift verbunden ist und eine zweite Klemme des zweiten PD-Sendeempfangsmoduls (21) mit dem Datenstift verbunden ist;
in einem Fall, in dem das Datenkabel (2) mit einem Ladegerät (1) verbunden ist, wenn das Ladegerät (1) ein erstes Ladegerät ist, sich das zweite PD-Sendeempfangsmodul (21) in einem Betriebszustand befindet und das zweite PD-Sendeempfangsmodul (21) dazu konfiguriert ist, eine gegenseitige Umwandlung eines über den Datenstift übertragenen Gleichtaktsignals und eines über den CC-Stift übertragenen PD-Aufladesignals durchzuführen, um ein PD-Aufladen an einer aufzuladenden Vorrichtung durchzuführen, oder das Datenkabel (2) und das erste Ladegerät ein Nicht-PD-Aufladen an der aufzuladenden Vorrichtung auf Grundlage eines durch den Datenstift übertragenen Differenzsignals durchführen;
in einem Fall, in dem das Datenkabel (2) mit einem Ladegerät (1) verbunden ist, wenn das Ladegerät (1) ein zweites Ladegerät ist, sich das zweite PD-Sendeempfangsmodul (21) in einem Nicht-Betriebszustand befindet und das Datenkabel (2) und das zweite Ladegerät ein Nicht-PD-Aufladen an der aufzuladenden Vorrichtung auf Grundlage eines durch den Datenstift übertragenen Differenzsignals durchführen; wobei in einem Fall, in dem das zweite PD-Sendeempfangsmodul (21) ein zweites Signal empfängt, das über den Datenstift übertragen wird, das Ladegerät (1) das erste Ladegerät ist; und in einem Fall, in dem das zweite PD-Sendeempfangsmodul (21) das zweite Signal, das über den Datenstift übertragen wird, nicht empfängt, das Ladegerät (1) das zweite Ladegerät ist, und das Datenkabel (2) ein erstes Signal erzeugt, wenn es mit der aufzuladenden Vorrichtung verbunden ist, und das erste Ladegerät das zweite Signal als Reaktion auf das erste Signal erzeugt.

8. Ladegerät (2) gemäß Anspruch 7, wobei das zweite PD-Sendeempfangsmodul (21) beinhaltet: eine zweite PD-Steuervorrichtung, eine zweite Wellenformanpassungsschaltung, einen zweiten Gleichtaktausgangsverstärker, eine zweite Filterschaltung und einen zweiten Gleichtakteingangsverstärker; wobei die zweite PD-Steuervorrichtung, der CC-Stift, die zweite Wellenformanpassungsschaltung und die zweite Filterschaltung mit dem Datenstift verbunden sind, und die zweite Filterschaltung ferner mit dem Datenstift über den zweiten Gleichtakteingangsverstärker verbunden ist;
die zweite PD-Steuervorrichtung dazu konfiguriert ist, ein Rechtecksignal zu erhalten, das über den CC-Stift übertragen wird, die zweite Wellenformanpassungsschaltung dazu konfiguriert ist, das von der zweiten PD-Steuervorrichtung erhaltene Rechtecksignal in ein Sinuswellensignal umzuwandeln und eine Amplitude des Sinuswellensignals zu reduzieren, und der zweite Gleichtaktausgangsverstärker dazu konfiguriert ist, ein reduziertes Sinuswellensignal in ein Gleichtaktsignal umzuwandeln und eine Gleichtaktübertragung über den Datenstift durchzuführen; und der zweite Gleichtakteingangsverstärker dazu konfiguriert ist, das über den Datenstift übertragene Gleichtaktsignal zu verstärken, und die zweite Filterschaltung dazu konfiguriert ist, eine Filterung an einem verstärkten Gleichtaktsignal durchzuführen, ein gefiltertes und verstärktes Gleichtaktsignal in ein Rechtecksignal umzuwandeln und das Rechtecksignal an die erste PD-Steuervorrichtung zu übertragen, um das Rechtecksignal an die aufzuladende Vorrichtung durch den CC-Stift zu übertragen.

9. Datenkabel (2) gemäß Anspruch 8, wobei die zweite PD-Steuervorrichtung dazu konfiguriert ist, das erste Signal zu erzeugen, wenn ein erstes voreingestelltes elektrisches Signal von dem CC-Stift durch den zweiten Gleichtakteingangsverstärker erkannt wird, und das erste Signal über die zweite Wellenformanpassungsschaltung und den zweiten Gleichtaktausgangsverstärker an den Datenstift zu übertragen, wobei, wenn das Datenkabel (2) mit einer aufzuladenden Vorrichtung verbunden ist, die das PD-Aufladen unterstützt, und der CC-Stift über einen ersten Widerstand in der aufzuladenden Vorrichtung, die das PD-Aufladen unterstützt, geerdet ist, der CC-Stift das erste voreingestellte elektrische Signal aufweist.

10. Datenkabel (2) gemäß Anspruch 8, wobei der Datenstift einen positiven Datenstift und einen negativen Datenstift beinhaltet, und der zweite Gleichtakteingangsverstärker dazu konfiguriert ist, ein drittes Kommunikationssignal, das über den positiven Datenstift übertragen wird, und ein viertes Kommunikationssignal, das über den negativen Datenstift übertragen wird, zu erhalten und das dritte Kommunikationssignal und das vierte Kommunikationssignal zu addieren, um das Gleichtaktsignal zu erhalten.

11. Datenkabel (2) gemäß Anspruch 8, wobei der zweite Gleichtaktausgangsverstärker dazu konfiguriert ist, ein von der zweiten Wellenformanpassungsschaltung verarbeitetes Sinussignal in ein erstes Kommunikationssignal und ein zweites Kommunikationssignal aufzuteilen, wobei das erste Kommunikationssignal und das zweite Kommunikationssignal Gleichtaktsignale sind.

12. Ein Ladegerät, beinhaltend ein Ladegerät (1) und ein Datenkabel (2), und **dadurch gekennzeichnet, dass** das Ladegerät (1) das Ladegerät (1) gemäß einem der Ansprüche 1 bis 6 ist, das Datenkabel (2) das Datenkabel (2) gemäß einem der Ansprüche 7 bis 11 ist, und der Datenstift in dem ersten Typ-A-Anschluss (10) entsprechend mit dem Datenstift in dem zweiten Typ-A-Anschluss (20) verbunden ist.

13. Ladevorrichtung gemäß Anspruch 12, wobei das zweite PD-Sendeempfangsmodul (21) das erste Signal erzeugt, wenn auf Grundlage eines über den CC-Stift übertragenen elektrischen Signals bestimmt wird, dass das Datenkabel (2) in die aufzuladende Vorrichtung eingesetzt ist, und das erste Signal über den Datenstift an das erste PD-Sendeempfangsmodul (12) übertragen wird; und
in dem ersten PD-Sendeempfangsmodul (12) die erste Klemme des ersten PD-Sendeempfangsmoduls (12) mit der zweiten Klemme des ersten PD-Sendeempfangsmoduls (12) als Reaktion auf das erste Signal in Verbindung steht und das zweite Signal erzeugt wird, das zweite Signal über den Datenstift an das zweite PD-Sendeempfangsmodul (21) übertragen wird, und in dem zweiten PD-Sendeempfangsmodul (21) die erste Klemme des zweiten PD-Sendeempfangsmoduls (21) als Reaktion auf das zweite Signal mit der zweiten Klemme des zweiten PD-Sendeempfangsmoduls (21) in Verbindung steht.

## Revendications

1. Un chargeur (1), comprenant un premier port de type A (10), un module de charge (11), et un premier module d'émission-réception PD (*Power Delivery,* distribution d'énergie) (12) ; dans lequel
le premier port de type A (10) comprend une broche de données, une première borne du module de charge (11) est connectée à la broche de données, une deuxième borne du module de charge (11) est connectée à une première borne du premier module d'émission-réception PD (12), et une deuxième borne du premier module d'émissionréception PD (12) est connectée à la broche de données ;
dans le cas où le chargeur (1) est connecté à un câble de données (2), si le câble de données (2) est un premier câble de données, le premier module d'émission-réception PD (12) est dans un état de fonctionnement, et le module de charge (11) effectue une charge non-PD sur un dispositif à charger sur la base d'un signal de mode différentiel transmis par l'intermédiaire de la broche de données, ou le module de charge (11) effectue une charge PD sur le dispositif à charger sur la base d'un signal de mode commun traité par le premier module d'émission-réception PD (12) et transmis par l'intermédiaire de la broche de données ;
dans le cas où le chargeur (1) est connecté au câble de données (2), si le câble de données (2) est un deuxième câble de données, le premier module d'émissionréception PD (12) est dans un état de non-fonctionnement, et le module de charge (11) effectue une charge non-PD sur le dispositif à charger sur la base d'un signal de mode différentiel transmis par l'intermédiaire de la broche de données ; dans lequel dans le cas où le premier module d'émission-réception PD (12) reçoit un premier signal transmis par l'intermédiaire de la broche de données, le câble de données (2) est le premier câble de données ; et dans le cas où le premier module d'émission-réception PD (12) ne reçoit pas le premier signal transmis par l'intermédiaire de la broche de données, le câble de données (2) est le deuxième câble de données, et le premier câble de données génère le premier signal lorsqu'il est connecté au dispositif à charger.

2. Le chargeur (1) selon la revendication 1, dans lequel le premier module d'émissionréception PD (12) comprend : un premier contrôleur PD (121), un premier circuit d'ajustement de forme d'onde (122), un premier amplificateur de sortie en mode commun (123), un premier circuit de filtrage (124), et un premier amplificateur d'entrée en mode commun (125) ; dans lequel
le premier contrôleur PD (121) est connecté au module de charge (11), au premier circuit d'ajustement de forme d'onde (122), et au premier circuit de filtrage (124), le premier circuit d'ajustement de forme d'onde (122) est connecté en outre à la broche de données par l'intermédiaire du premier amplificateur de sortie en mode commun (123), et le premier circuit de filtrage (124) est connecté en outre à la broche de données par l'intermédiaire du premier amplificateur d'entrée en mode commun (125) ;
le premier circuit d'ajustement de forme d'onde (122) est configuré pour convertir un signal carré émis par le premier contrôleur PD (121) en un signal sinusoïdal et réduire une amplitude du signal sinusoïdal, le premier amplificateur de sortie en mode commun (123) est configuré pour convertir un signal sinusoïdal réduit en un signal de mode commun et effectuer une transmission en mode commun par l'intermédiaire de la broche de données ; et
le premier amplificateur d'entrée en mode commun (125) est configuré pour amplifier le signal de mode commun transmis par l'intermédiaire de la broche de données, et le premier circuit de filtrage (124) est configuré pour effectuer un filtrage sur un signal de mode commun amplifié, convertir un signal de mode commun filtré et amplifié en un signal carré et transmettre le signal carré au premier contrôleur PD (121).

3. Le chargeur (1) selon la revendication 2, dans lequel le premier contrôleur PD (121) est configuré pour générer un signal de charge PD dans le cas où une valeur d'un premier signal électrique provenant de la broche de données détecté par le premier amplificateur d'entrée en mode commun (125) est inférieure à une valeur prédéfinie, et transmettre le signal de charge PD à la broche de données par l'intermédiaire du premier circuit d'ajustement de forme d'onde (122) et du premier amplificateur de sortie en mode commun (123), afin d'effectuer une charge PD sur le dispositif à charger, dans lequel la valeur prédéfinie ne chevauche pas une valeur d'un deuxième signal électrique provenant de la broche de données lors de la transmission d'un signal de charge non-PD.

4. Le chargeur (1) selon la revendication 2, dans lequel la broche de données comprend une broche de données positive et une broche de données négative, le premier amplificateur d'entrée en mode commun (125) est configuré pour amplifier un premier signal de communication transmis par l'intermédiaire de la broche de données positive et un deuxième signal de communication transmis par l'intermédiaire de la broche de données négative, et additionner le premier signal de communication et le deuxième signal de communication afin d'obtenir le signal de mode commun.

5. Le chargeur (1) selon la revendication 2, dans lequel le premier amplificateur de sortie en mode commun (123) est configuré pour scinder un signal sinusoïdal traité par le premier circuit d'ajustement de forme d'onde (122) en un troisième signal de communication et un quatrième signal de communication, et le troisième signal de communication et le quatrième signal de communication sont des signaux de mode commun.

6. Le chargeur (1) selon la revendication 1, dans lequel
dans le cas où le chargeur (1) est connecté au premier câble de données, si une priorité de la charge non-PD est supérieure à une priorité de la charge PD, la charge non-PD est effectuée sur le dispositif à charger ; et si la charge non-PD échoue, la charge PD est effectuée sur le dispositif à charger ; et
dans le cas où le chargeur (1) est connecté au premier câble de données, si la priorité de la charge PD est supérieure à la priorité de la charge non-PD, la charge PD est effectuée sur le dispositif à charger ; et si la charge PD échoue, la charge non-PD est effectuée sur le dispositif à charger.

7. Un câble de données (2), comprenant : un deuxième port de type A (20) et un port de type C (22), dans lequel le deuxième port de type A (20) et le port de type C (22) sont connectés par un câble (23), le deuxième port de type A (20) et le port de type C (22) comprennent chacun une broche CC et une broche de données, et des broches CC et des broches de données dans le deuxième port de type A (20) et le port de type C (22) sont connectées en correspondance biunivoque ;
**caractérisé en ce que**
le câble de données (2) est pourvu d'un deuxième module d'émission-réception PD (21), une première borne du deuxième module d'émission-réception PD (21) étant connectée à la broche CC, et une deuxième borne du deuxième module d'émissionréception PD (21) étant connectée à la broche de données ;
dans le cas où le câble de données (2) est connecté à un chargeur (1), si le chargeur (1) est un premier chargeur, le deuxième module d'émission-réception PD (21) est dans un état de fonctionnement, et le deuxième module d'émission-réception PD (21) est configuré pour effectuer une conversion mutuelle sur un signal de mode commun transmis par l'intermédiaire de la broche de données et un signal de charge PD transmis par l'intermédiaire de la broche CC, afin d'effectuer une charge PD sur un dispositif à charger, ou le câble de données (2) et le premier chargeur effectuent une charge non-PD sur le dispositif à charger sur la base d'un signal différentiel transmis par l'intermédiaire de la broche de données ;
dans le cas où le câble de données (2) est connecté à un chargeur (1), si le chargeur (1) est un deuxième chargeur, le deuxième module d'émission-réception PD (21) est dans un état de non-fonctionnement, et le câble de données (2) et le deuxième chargeur effectuent une charge non-PD sur le dispositif à charger sur la base d'un signal différentiel transmis par l'intermédiaire de la broche de données ; dans lequel dans le cas où le deuxième module d'émission-réception PD (21) reçoit un deuxième signal transmis par l'intermédiaire de la broche de données, le chargeur (1) est le premier chargeur ; et dans le cas où le deuxième module d'émission-réception PD (21) ne reçoit pas le deuxième signal transmis par l'intermédiaire de la broche de données, le chargeur (1) est le deuxième chargeur, et le câble de données (2) génère un premier signal lorsqu'il est connecté au dispositif à charger, et le premier chargeur génère le deuxième signal en réponse au premier signal.

8. Le câble de données (2) selon la revendication 7, dans lequel le deuxième module d'émission-réception PD (21) comprend : un deuxième contrôleur PD, un deuxième circuit d'ajustement de forme d'onde, un deuxième amplificateur de sortie en mode commun, un deuxième circuit de filtrage, et un deuxième amplificateur d'entrée en mode commun ; dans lequel
le deuxième contrôleur PD, la broche CC, le deuxième circuit d'ajustement de forme d'onde, et le deuxième circuit de filtrage sont connectés à la broche de données, et le deuxième circuit de filtrage est connecté en outre à la broche de données par l'intermédiaire du deuxième amplificateur d'entrée en mode commun ;
le deuxième contrôleur PD est configuré pour obtenir un signal carré transmis par l'intermédiaire de la broche CC, le deuxième circuit d'ajustement de forme d'onde est configuré pour convertir le signal carré obtenu par le deuxième contrôleur PD en un signal sinusoïdal et réduire une amplitude du signal sinusoïdal, et le deuxième amplificateur de sortie en mode commun est configuré pour convertir un signal sinusoïdal réduit en un signal de mode commun et effectuer une transmission en mode commun par l'intermédiaire de la broche de données ; et
le deuxième amplificateur d'entrée en mode commun est configuré pour amplifier le signal de mode commun transmis par l'intermédiaire de la broche de données, et le deuxième circuit de filtrage est configuré pour effectuer un filtrage sur un signal de mode commun amplifié, convertir un signal de mode commun filtré et amplifié en un signal carré et transmettre le signal carré au deuxième contrôleur PD, afin de transmettre le signal carré au dispositif à charger par l'intermédiaire de la broche CC.

9. Le câble de données (2) selon la revendication 8, dans lequel le deuxième contrôleur PD est configuré pour générer le premier signal lorsqu'un premier signal électrique prédéfini provenant de la broche CC est détecté par le deuxième amplificateur d'entrée en mode commun, et transmettre le premier signal à la broche de données par l'intermédiaire du deuxième circuit d'ajustement de forme d'onde et du deuxième amplificateur de sortie en mode commun, dans lequel lorsque le câble de données (2) est connecté à un dispositif à charger qui prend en charge la charge PD, et que la broche CC est mise à la masse par l'intermédiaire d'une première résistance dans le dispositif à charger qui prend en charge la charge PD, la broche CC a le premier signal électrique prédéfini.

10. Le câble de données (2) selon la revendication 8, dans lequel la broche de données comprend une broche de données positive et une broche de données négative, et le deuxième amplificateur d'entrée en mode commun est configuré pour obtenir un troisième signal de communication transmis par l'intermédiaire de la broche de données positive et un quatrième signal de communication transmis par l'intermédiaire de la broche de données négative, et additionner le troisième signal de communication et le quatrième signal de communication afin d'obtenir le signal de mode commun.

11. Le câble de données (2) selon la revendication 8, dans lequel le deuxième amplificateur de sortie en mode commun est configuré pour scinder un signal sinusoïdal traité par le deuxième circuit d'ajustement de forme d'onde en un premier signal de communication et un deuxième signal de communication, le premier signal de communication et le deuxième signal de communication étant des signaux de mode commun.

12. Un dispositif de charge, comprenant un chargeur (1) et un câble de données (2), et **caractérisé en ce que** le chargeur (1) est le chargeur (1) selon l'une quelconque des revendications 1 à 6, le câble de données (2) est le câble de données (2) selon l'une quelconque des revendications 7 à 11, et la broche de données présente dans le premier port de type A (10) est connectée de manière correspondante à la broche de données présente dans le deuxième port de type A (20).

13. Le dispositif de charge selon la revendication 12, dans lequel le deuxième module d'émission-réception PD (21) génère le premier signal lorsqu'il est déterminé, sur la base d'un signal électrique transmis par l'intermédiaire de la broche CC, que le câble de données (2) est inséré dans le dispositif à charger, et le premier signal est transmis au premier module d'émission-réception PD (12) par l'intermédiaire de la broche de données ; et
dans le premier module d'émission-réception PD (12), la première borne du premier module d'émission-réception PD (12) est en communication avec la deuxième borne du premier module d'émission-réception PD (12) en réponse au premier signal, et le deuxième signal est généré, le deuxième signal est transmis au deuxième module d'émission-réception PD (21) par l'intermédiaire de la broche de données, et dans le deuxième module d'émission-réception PD (21), la première borne du deuxième module d'émission-réception PD (21) est en communication avec la deuxième borne du deuxième module d'émission-réception PD (21) en réponse au deuxième signal.
